# EUROPÄISCHE PATENTSCHRIFT

(11) **EP 1 256 106 B1**
(45) Veröffentlichungstag und Bekanntmachung des Hinweises auf die Patenterteilung: **21.01.2004**
(21) Anmeldenummer: 01913564.9
(22) Anmeldetag: 03.02.2001
(51) Int. Cl.: G08G 1/01, G08G 1/0968

(54) **VORRICHTUNG UND VERFAHREN ZUR ERFASSUNG UND VORVERARBEITUNG VON FAHRZEUG-VERKEHRS-UND FAHRERDATEN**
DEVICE AND METHOD FOR DETECTING AND PREPROCESSING VEHICLE, TRAFFIC AND/OR DRIVER-RELATED DATA
DISPOSITIF ET PROCEDE POUR DETECTER ET PRETRAITER DES DONNEES RELATIVES A UN VEHICULE, A LA CIRCULATION ET/OU A UN CONDUCTEUR

(30) Priorität: 04.02.2000 DE 10004968
(43) Veröffentlichungstag der Anmeldung: 13.11.2002
(73) Patentinhaber: ROBERT BOSCH GMBH, 70442 Stuttgart (DE)
(72) Erfinder: HESSLING, Matthias, 31141 Hildesheim (DE); PETZOLD, Bernd, 31234 Edemissen (DE); HAHLWEG, Cornelius, 22147 Hamburg (DE); DRAEGER, Gerd, 38102 Braunsweig (DE); KERSKEN, Ulrich, 31199 Diekholzen (DE)
(86) Internationale Anmeldenummer: PCT/DE2001/000420
(87) Internationale Veröffentlichungsnummer: WO 2001/057826

(56) Entgegenhaltungen:
- EP-A- 0 715 287
- WO-A-96/22202
- DE-A- 19 700 353
- US-A- 5 919 239

## Beschreibung

### Technisches Gebiet

Die Erfindung betrifft ein Verfahren zur Erfassung und Vorverarbeitung von Fahrzeug-, Verkehrs- und/oder Fahrerdaten, bei dem während der Fahrt fahrzeug-, verkehrs- und fahrerbezogene Daten erfasst, vorverarbeitet und zur weiteren Auswertung zur Verfügung gestellt werden, sowie eine Vorrichtung zur Durchführung eines derartigen Verfahrens.

### Stand der Technik

Verfahren zur Datenerfassung und Datenverarbeitung im Fahrzeug sind bekannt. Eine derartige Datenerfassung kann zum Beispiel der Erstellung von Wamhinweisen für den Fahrer eines Kraftfahrzeuges dienen. Bei solchen Systemen können auch aus mehreren Originalgrößen abgeleitete Größen erzeugt werden. Nicht bekannt ist es jedoch, den zeitlichen und örtlichen Verlauf der aufgezeichneten Daten zu registrieren und bei der Verarbeitung der Daten zu berücksichtigen. Eine Erfassung möglichst vieler relevanter beziehungsweise relevant erscheinender Größen und der Änderungen solcher Größen gewinnt jedoch zunehmend an Bedeutung, um hieraus eine weiterführende Statistik über individuelles Fahrverhalten in Abhängigkeit von Umwelt- und Fahrzeugzuständen beziehungsweise deren Änderung betreiben zu können. Eine Aufzeichnung sämtlicher Größen zur eventuellen späteren Auswertung führt jedoch selbst bei grober zeitlicher Diskretisierung zu extrem großen Datenmengen, was sowohl die Effektivität der Speicherung als auch die der späteren Auswertung in Frage stellt.

Das Dokument EP 0 715 287 A1 offenbart ein Verfahren und eine Vorrichtung zur Gewinnung von Informationen über die Umgebung eines Fahrzeuges.

### Darstellung der Erfindung, Aufgabe, Lösung, Vorteile

Aufgabe der vorliegenden Erfindung war es daher, ein Verfahren zur Erfassung und Vorverarbeitung von Fahrzeug-, Verkehrsund/oder Fahrerdaten zur Verfügung zu stellen, bei welchen alle für eine Auswertung des Fahrverhaltens relevanten Daten erfasst werden, ohne dass unpraktikabel große Datenmengen anfallen.

Diese Aufgabe wird durch ein Verfahren mit den Merkmalen des Anspruches 1 gelöst.

Das genannte Verfahren zeichnet sich dadurch aus, dass zusammen mit den aufgezeichneten fahrzeug-, verkehrs- und fahrerbezogenen Daten auch der Zeitpunkt und der Ort der Datenaufzeichnung erfasst werden. Hierdurch ist es möglich, die auf das Fahrzeug, die Verkehrssituation oder den Fahrer bezogenen Daten einem konkreten Zeitpunkt und einem konkreten Ort auf der Fahrtroute zuzuordnen, was eine differenziertere Auswertung der Daten einschließlich einer Datenreduktion durch Ableitung interessierender Größen und durch Bestimmung von Korrelationen ermöglicht. Durch den eindeutigen Zusammenhang zwischen Ort und Zeit ist es ferner möglich, Ort und Zeit als zugrunde liegende Variable gegeneinander auszutauschen und hierdurch die aufzuzeichnende Datenmenge zu reduzieren.

Weiterhin werden die erfassten Daten vorteilhafterweise mit einer digitalen Karte korreliert. Dabei kann eine direkte, datenbankmäßige Referenz von den erfassten Daten auf die in der Karte enthaltenden Objekte vorgesehen werden. So kann z.B. die Geschwindigkeit und die absolute und/oder relative Häufigkeit, mit der ein Fahrer bestimmte Streckenabschnitte oder verschiedene Straßentypen (Landstraße, Bundesstraße, Autobahn etc.) befährt, in der digitalen Karte vermerkt werden. Ebenso ist es denkbar, dass biometrische Daten des Fahrers mit Streckenabschnitten oder Straßentypen korreliert werden, um z.B: festzustellen, welche hiervon eine Stresssituation für den Fahrer bedeuten. Dabei findet wiederum vorteilhafterweise eine Kopplung der Datenerfassung mit einem Navigationssystem statt, um diesem die gewonnenen Informationen für eine intelligente Routenplanung zugänglich zu machen.

Gemäß Anspruch 3 erfolgt die Verarbeitung der Daten vorzugsweise durch Bildung einer Langzeitstatistik, einer Kurzzeitstatistik und/oder einer Datenkompression. Bei einer Kurzzeitstatistik wird ein Satz über der Zeit veränderlicher integraler Parameter unter Datenreduktion aufgezeichnet. Ein Beispiel hierfür ist die Aufzeichnung der Geschwindigkeit oder der Beschleunigung des Fahrzeuges in Abhängigkeit von der Zeit beziehungsweise dem Ort. Bei einer Langzeitstatistik können bestimmte Datensätze durch echtes Aufintegrieren ständig aktualisiert werden, ohne dass dabei der zeitliche Verlauf im einzelnen interessiert. Ein Beispiel für derartige Größen sind die Füllstände von Kraftstoff, Wischwasser, Öl und dergleichen. Femer ist es möglich, zahlreiche Größen durch geeignete und unter Umständen verlustfreie Kompressionsverfahren in ihrem tatsächlichen Verlauf aufzuzeichnen. Verfahren zur Datenkompression sind bekannt und nutzen die Tatsache aus, dass ein durch Messung ermittelter Datenstrom im allgemeinen Regelmäßigkeiten (zum Beispiel Stetigkeit) aufweist, die eine komprimierte Speicherung der Daten erlauben.

Ferner ist es möglich, durch geeignete mathematische beziehungsweise logische Verknüpfungen zwischen verschiedenen Daten abgeleitete Größen zur gewinnen, denen das eigentliche Interesse gilt. Nach Bestimmung dieser Größen können dann die zugrunde liegenden Originaldaten gelöscht werden, was unter Umständen eine erhebliche Ersparnis an Speicherplatz mit sich bringt. Ein Beispiel für eine abgeleitete Größe ist die Glatteisgefahr, welche sich aus einer Verknüpfung von Außentemperaturen und Antriebsschlupf ergibt.

Die Erfassung und Verarbeitung der Daten erfolgt gemäß Anspruch 4 vorzugsweise personenbezogen, das heißt insbesondere auf den Fahrer des Fahrzeugs bezogen. Zu diesem Zweck ist der Fahrer zu identifizieren, so dass er den aufgezeichneten Daten zugeordnet werden kann. Mit der personenbezogenen Verarbeitung können individuelle Verhaltensmuster des Fahrverhaltens ermittelt werden. Diese Verhaltensmuster können dann in anderen Systemen wie z.B. in Navigationssystemen verwendet werden, um diese nutzerspezifisch anzupassen.

Die Vorrichtung zur Erfassung und Vorverarbeitung von Fahrzeug-, Verkehrs- und/oder Fahrerdaten enthaltend Sensoren zur Abtastung von fahrzeug-, verkehrsund/oder fahrerbezogenen Daten sowie Verarbeitungseinheiten und Speichereinheiten für die aufgezeichneten Daten enthält eine Uhr sowie einen Positionssensor zur Aufzeichnung von Zeit und Ort parallel zu den genannten Daten. Mit der Vorrichtung ist die Durchführung des oben beschriebenen Verfahrens möglich mit dem Vorteil einer effizienten und aussagekräftigen Erfassung des Fahrerverhaliens. Als Positionssensor ist insbesondere ein Ortungssystem wie das GPS (Global Positioning System) geeignet, welches eine Aufzeichnung der Fahrzeug- und Verkehrsdaten über dem absoluten geographischen Ort erlaubt (geographische Koordinate mit entsprechender Ungenauigkeit). Bei der Ausstattung der Vorrichtung mit einem autarken Navigationssystem (mit eigener digitaler Karte) wird eine Verfeinerung beziehungsweise Konkretisierung der Ortsbestimmung dahingehend möglich, dass die Erfassung der Daten mit Bezug auf die exakte Kartenposition unter erhöhter Genauigkeit möglich wird.

Die Vorrichtung kann vorzugsweise als Teil eines Automobils vorgesehen werden. Sie ist auf diese Anwendung jedoch nicht beschränkt und kann unterschiedliche Arten von Verkehrsverhalten erfassen. Zum Beispiel können Personen hiermit im öffentlichen Verkehr eine eigene Routenstatistik und Routenaufzeichnung betreiben. In ähnlicher Weise können Betreiber des öffentlichen Personennahverkehrs (ÖPNV) mit einer derartigen Vorrichtung Daten über die Auslastung und das Controlling der Verkehrsmittel gewinnen. Darüber hinaus ist die Vorrichtung auch personenunabhängig einsetzbar, zum Beispiel bei der Verfolgung von Frachtstücken unter Erzeugung einer integrierten Statistik.

### Bester Weg zur Ausführung der Erfindung

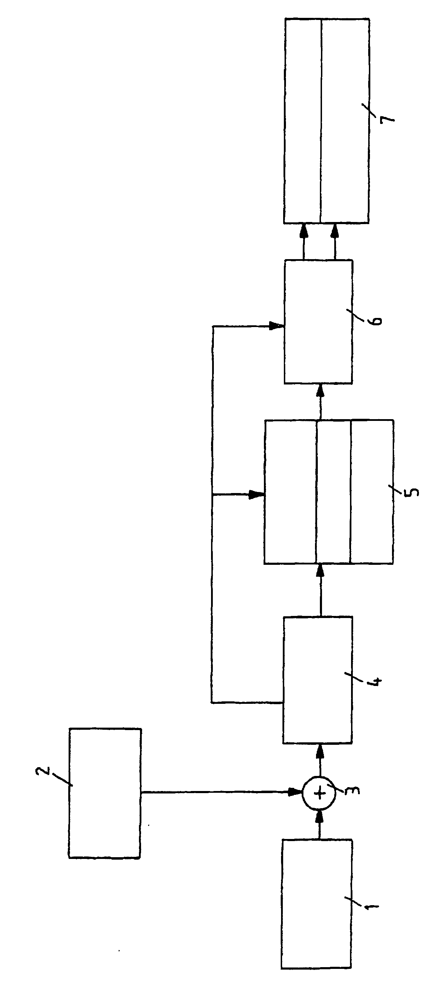

Im folgenden wird die Erfindung mit Hilfe der Figur beispielhaft erläutert. Die einzige Abbildung zeigt eine Blockdarstellung des erfindungsgemäßen Verfahrens.

In der Figur sind durch Pfeile die Signalflüsse in einer erfindungsgemäßen Vorrichtung dargestellt, die sich in einem Automobil befindet. Die dabei übermittelten Daten sind jeweils mehrkomponentig, also vektorieller Art. Aus dem Blockelement 1 werden die interessierenden Fahrzeugdaten über Fahrzeugsensoren zur Verfügung . gestellt. Hierzu gehören insbesondere die Zeit und eine Ortsbestimmung, die zum Beispiel mit Hilfe eines GPS Systems unter Abgleich mit einer digitalen Karte bereitgestellt werden kann.

Aus dem Block mit der Ziffer 2 werden die Fahrerdaten beziehungsweise andere quasistatische Parameter hinzugefügt und in dem Summierglied 3 mit den Fahrzeugdaten vereinigt. Hierdurch entsteht ein kontinuierlicher, gemischt analog-digitaler Datenstrom, der nachfolgend einer Echtzeit-Vorverarbeitung 4 (pre-processing) zugeführt wird. Die genannten Daten werden dabei über der Zeit erfasst, das heißt, dass der Zeitpunkt ihrer Ermittlung parallel zu den Daten aufgezeichnet und festgehalten wird. Als zu erfassende Daten kommen bei der Verfolgung eines Automobils insbesondere in Frage:
Kartenposition beziehungsweise geographische Koordinaten;
zurückgelegter Weg (Betrag, Kilometerzähler);
Höhe über NN;
Geschwindigkeit des Fahrzeugs;
Beschleunigung des Fahrzeugs;
Fahrtrichtung;
Motordrehzahl;
Motordaten wie Temperatur, Betriebsbereitschaft, Wamzustände;
Schaltzustände des Getriebes;
Kurveneinschlag;
Schaltzustände von Wischer, Licht, Blinker, Warnblinker,
Notfallauslösung des Airbags;
ABS, Antischlupf;
momentaner Kraftstoffverbrauch;
Füllzustände für Kraftstoff, Wischwasser, Öl, Brems- und Serviceflüssigkeiten;
Geräuschpegel etc.

An Umweltdaten können insbesondere die Temperatur, Luftfeuchtigkeit, Helligkeit, Wetterbedingungen und dergleichen aufgezeichnet werden. Biodaten des Fahrers beziehungsweise von Insassen des Fahrzeuges können Herzschlag, Atmung, Temperatur, Augenaktivität etc. umfassen. Weiterhin können Fahrer, Insassen des Fahrzeuges und/oder Fahrzeug identifiziert und den gemessenen Daten eindeutig zugeordnet werden.

In der Einheit 4 zur Echtzeit-Vorverarbeitung erfolgt die komplette Digitalisierung der einlaufenden Daten. In Abhängigkeit von der zeitlichen Änderung der einlaufenden Größen sowie von äußeren, seitens des Fahrermoduls 2 zugeführten Daten wird in der Einheit 4 auch die sampling rate festgelegt, d.h. die Abtasthäufigkeit für die zu erfassenden Daten. Weiterhin werden gesonderte Parameter in Vektorform ausgegeben, die der Ansteuerung der nachfolgenden Codierungs- und Statistikeinheit 5 und der Verknüpfungseinheit 6 dienen.

Die Einheit 5 erhält von der Vorverarbeitungseinheit 4 die vollständig digitalisierten Daten und übernimmt deren komponentenweise Codierung beziehungsweise Kompression und/oder die Ableitung statistischer Größen (Kurzzeitstatistik/Langzeitstatistik). Bei der Verarbeitung wird die Einheit 5 in ihren Parametern von der Vorverarbeitungseinheit 4 gesteuert.

Die Verarbeitungseinheit 5 übergibt die verarbeiteten Daten an die Verknüpfungseinheit 6, in welcher 'eine mathematisch/logische Verknüpfung der Daten erfolgt. Hierdurch können neue Größen gebildet werden. Zum Beispiel kann Glatteisgefahr als Resultat von Außentemperaturen unter 0°C und einem starken Antriebsschlupf festgestellt werden. Natürlich kann in der Einheit 6 auch ein einfaches Durchreichen von Größen erfolgen, wenn diese keiner Verarbeitung unterzogen werden sollen.

Die von der Einheit 6 zur Verfügung gestellten Größen gelangen schließlich zur Aufzeichnungseinheit 7, welche die Speicherung beziehungsweise Weitergabe der zeitabhängigen sowie der quasistatischen integralen Größen übernimmt.

In den Verarbeitungseinheiten 5 und 6 kann die Verarbeitung der Parameter variabel erfolgen. Insbesondere können die Parameter der zeitlichen Auflösung, der Statistik und der Codierung/Kompression personenbezogen, situationsbezogen und/oder kontextbezogen variabel gestaltet beziehungsweise während der Fahrt gesteuert werden. Die Gewinnung der dazu benötigten Steuergrößen geschieht in der Vorverarbeitungseinheit 4, in welcher die aktuellen Fahrdaten in unkomprimierter und eng abgetasteter Form vor der Weiterverarbeitung/Speicherung in Echtzeit ausgewertet werden.

Durch die mathematische und logische Verknüpfung von Daten in der Einheit 6 können bereits während der Fahrt, also in Echtzeit, abgeleitete Größen bestimmt und der Datenstrom somit reduziert werden.

## Patentansprüche

1. Verfahren zur Erfassung und Vorverarbeitung von Fahrzeug- und Verkehrsdaten, bei dem während der Fahrt fahrzeug- und verkehrsbezogene Daten erfaßt, vorverarbeitet und zur weiteren Auswertung zur Verfügung gestellt werden,
und bei dem zusammen mit den aufgezeichneten Daten die Orte der Aufzeichnung erfaßt werden,
**dadurch gekennzeichnet,**
**daß** zusammen mit den aufgezeichneten Daten die Zeitpunkte der Aufzeichnung erfaßt werden und daß die aufgezeichneten Daten oder die daraus durch Vorverarbeitung gewonnenen Daten mit einer digitalen Karte korreliert werden.

2. verfahren nach Anspruch 1, **dadurch gekennzeichnet, daß** zusätzliche fahrerbezogene Daten erfaßt und diese oder aus ihnen durch Vorverarbeitung abgeleitete Daten mit der digitalen Karte korreliert werden.

3. Verfahren nach einer der Ansprüche 1 oder 2, **dadurch gekennzeichnet, daß** die Datenverarbeitung durch Bildung einer Langzeitstatistik, einer Kurzzeitstatistik und/oder einer Datenkompression erfolgt.

4. Verfahren nach einem der vorhergehenden Ansprüche, **dadurch gekennzeichnet, daß** die Datenerfassung personenbezogen, insbesondere fahrerbezogen, erfolgt.

## Claims

1. Method for detecting and preprocessing vehicle and traffic data, in which, during driving, vehicle-related and traffic-related data is detected, preprocessed and made available for further evaluation, and in which the locations of the recording are detected together with the recorded data, **characterized in that** the times of the recording are detected together with the recorded data, and **in that** the recorded data or the data acquired therefrom by preprocessing is correlated with a digital map.

2. Method according to Claim 1, **characterized in that** additional driver-related data is detected and this data or data derived from it by preprocessing is correlated with the digital map.

3. Method according to either of Claims 1 or 2, **characterized in that** the data processing is carried out by forming a long-term statistic, a short-term statistic and/or a data compression.

4. Method according to one of the preceding claims, **characterized in that** the data detection is carried out in a person-related, in particular driver-related, fashion.

## Revendications

1. Procédé pour saisir et prétraiter des données de véhicule et de la circulation dans lequel, pendant la marche, des données relatives au véhicule et à la circulation sont saisies, prétraitées et mises à disposition pour l'analyse suivante, et
dans lequel les lieux de l'enregistrement sont saisis conjointement avec les données enregistrées,
**caractérisé en ce que**
les instants de l'enregistrement sont saisis conjointement avec les données enregistrées, et **en ce que** les données enregistrées ou les données qui en sont tirées par prétraitement sont mises en corrélation avec une carte numérique.

2. Procédé selon la revendication 1,
**caractérisé en ce que**
des données supplémentaires, relatives au conducteur sont saisies et ces données, ou des données qui en sont dérivées par prétraitement sont mises en corrélation avec la carte numérique.

3. Procédé selon une des revendications 1 ou 2,
**caractérisé en ce que**
le traitement des données s'effectue par formation d'une statistique de temps longs, une statistique de temps courts et/ou une compression de données.

4. Procédé selon une des revendications précédentes,
**caractérisé en ce que**
la saisie des données s'effectue de façon relative à la personne, en particulier relative au conducteur.
